# NEW EUROPEAN PATENT SPECIFICATION

(11) **EP 0 505 163 B2**
(45) Date of publication and mention of the opposition decision: **16.12.1998**
(45) Mention of the grant of the patent: 10.07.1996
(21) Application number: 92302328.7
(22) Date of filing: 18.03.1992
(51) Int. Cl.: C08F 6/00, A61L 15/24

(54) **Reduction of residual monomers in superabsorbent polymers**
Reduzierung von Restmonomeren in superabsorbierenden Polymeren
Réduction de monomères résiduels en polymères superabsorbants

(30) Priority: 18.03.1991 US 670809
(43) Date of publication of application: 23.09.1992
(73) Proprietor: STOCKHAUSEN LOUISIANA LIMITED, Garyville, Louisiana 70051 (US)
(72) Inventor: Lind, Eric J., Naperville, Illinois 60563 (US); Smith, Scott J., Aurora, Illinois 60504 (US)
(74) Representative: Harrison, David Christopher

(56) References cited:
- EP-A- 0 441 975
- US-A- 4 766 173
- US-A- 4 929 717

## Description

The formation of the so called "superabsorbent" polymers requires polymerization of various types of normally water soluble monomers, but often water insoluble comonomers in conjunction therewith, in the presence of cross-linking agents. The cross- linking agents may be added during polymerization or after polymerization. These superabsorbent polymers are slightly cross-linked, water-insoluble, hydrogel polymers, and, when dried and essentially free of water have an incredible capacity to absorb water.

As a result, these superabsorbent polymer materials are quite useful as adjuncts in water absorbing structures and articles such as baby diapers, incontinence control products, and sanitary napkins.

Since these superabsorbent materials may be in close proximity to human skin, it is desirable to remove any low molecular weight compounds or components from the superabsorbent cross-linked polymeric materials, when these low molecular weight compounds may cause skin irritation or pose any other potential health threat.

These low molecular weight materials can include oligomers of water soluble polymers, which did not become cross-linked, but most importantly are the initial monomers which are used to form the superabsorbent lightly cross linked polymeric structures.

It is an object of this invention to reduce residual monomer content of both high molecular weight (i.e. above 10,000,000 Daltons) water soluble and slightly cross-linked, water insoluble, high molecular weight polymers. It is particularly an object to reduce total residual monomer content to concentrations below 50 parts per million based on dry polymer.

It is another object of this invention to reduce, from a superabsorbent lightly cross-linked water insoluble polymer. the monomer content contained therein to concentrations below at least 50 parts per million, based again upon dry weight of the polymer.

It is yet another object of this invention to reduce (meth)acrylic acid monomer content within superabsorbent lightly cross-linked water insoluble polymers, which polymers have been manufactured using (meth)acrylic acid or its salts. As used herein, the term (meth)acrylic acid is meant to include acrylic acid, methacrylic acid, any mixture of acrylic acid and methacrylic acid, and any water soluble salts thereof.

Finally, it is an object of this invention to reduce to levels below 25 parts per million, and preferably below 10 parts per million, based on dry polymer weight, the amount of acrylic acid, methacrylic acid, or salts thereof, which are contained in superabsorbent lightly cross-linked water insoluble polymers which polymers are manufactured using acrylic acid, methacrylic acid, any combination thereof, and/or any combination of free acid or salts thereof.

High molecular weight water soluble and water insoluble polymers which are manufactured from (meth)acrylic acid, i.e. acrylic acid, methacrylic acid, mixtures thereof or salts thereof, have been used in the past as flocculants, coagulants: and, when cross-linked with any number of cross-linking agents, form water-insoluble, hydrogel-forming polymers capable of absorbing large quantities of aqueous fluids, such as water or aqueous body wastes. These superabsorbents are further capable of retaining these absorbed aqueous fluids under moderate temperatures and pressures. The absorption characteristics of these hydrogel-forming polyners make them especially useful for incorporation into absorbent articles such as disposable diapers, incontinence products, and sanitary napkins. (See Harper, et. al., US-A-3,669,103 and Harmon, US-A-3,670,731).

These hydrogel-forming superabsorbent materials may be made from water absorbing starch resins, which are made by graft polymerizing unsaturated monomers, such as acrylic acid and/or methacrylic acid or its salts, onto various polysaccharides such as starch, cellulose, and dextrans. Sometimes this grafting process is followed by cross-linking the resulting grafted polymers. Exemplary of cross-linked grafted starch resins is Masuda, et. al. US-A-4,076,663.

These water-insoluble, lightly cross-linked hydrogel-forming materials can also comprise only cross-linked polymerized unsaturated monomers. The synthetic hydrogels contain no starch, no cellulose, no dextran, or any other polysaccharide onto which the polymer is grafted, but instead are synthesized from monomers such as acrylic acid, methacrylic acid, acrylamide, maleic acid, maleic anhydride, vinyl sulfonate, and methyl and ethyl acrylate Exemplary of such materials are those materials described in:
Brandt, et. al., US-A-4,654,039
Tsubakimoto, et. al., US-A-4,286,082
Westerman, US-A-4,062,817
Obayashi, US-A-4,340.706
Yuki, US-A-4,654,393

Basically, the above patents, excluding the patents teaching carbohydrate grafted materials, teach the use of acrylic acid or methacrylic acid, or their water soluble salts, or admixtures thereof with other monomers, to form high molecular weight lightly cross-linked water insoluble gel forming polymers which, when dried, have remarkable abilities to absorb many times their own weight in water or body fluids containing water.

There are many variations for manufacturing these high molecular weight polymers, such variations including polymerizing (meth)acrylic acid either as the free acid(s) or as neutralized salts, i.e., sodium acrylate, or performing the polymerization with anything from pure acrylic acid (unneutralized) to partially neutralized monomer acids, i.e. in excess of 75 mole percent neutralized with sodium hydroxide (or other alkali, such as sodium carbonate) neutralized salts of acrylic acid. These monomers may be added to water, either to form a solution or an inverse water-in-oil emulsion, and are then polymerized by the addition of polymer initiators, such as the free radical initiators exemplified in US-A-4,654,039. These free radical initiators can include peroxygen compounds such as sodium, potassium, and ammonium persulfates, caprylyl peroxide, benzoyl peroxide, hydrogen peroxide, cumene hydroperoxides, tertiary butyl diperphthalate, tertiary butyl perbenzoate, sodium peracetate, and sodium percarbonate. Other free radical initiators can include the conventional redox initiator systems which include some form of peroxygen compounds, such as those listed above, in combination with reducing agents, such as sodium bisulfite, L-ascorbic acid, and various ferrous ion salts. Organic free radical pre-cursors, such as the catalysts, may also be used. Login, et. al., US-A-4,473,689 teaches the use of certain minimum polymerization initiator concentrations in the context of preparing watersoluble polymer materials.

The acrylic acid, methacrylic acid, or partially neutralized salts thereof, or mixtures thereof are generally made up in water solution, or in a water-in-oil emulsion. When a water solution is polymerized, the solution can contain as little as from 5 - 15 weight percent of total monomer and as much as from 40 - 95 weight percent total monomer or monomer mix. To this aqueous solution is added a cross-linking agent, which is generally added in the amount from 0.001 mole percent to VAZO® is a registered trademark of DuPont de Nemours Company. 5 mole percent based on total moles of monomer present in the aqueous mixture. Preferably the cross-linking agent is contained in the aqueous mixture from 0.01 mole percent to 3 mole percent of total monomer present in the aqueous mixture. To this mixture, the free radical initiator is added and polymerization is initiated and proceeds normally. Polymerization can proceed in an aqueous solution or in an aqueous gel, or it can proceed in an inverse emulsion, i.e. a water-in-oil dispersion polymerization. In some cases, particularly the inverse suspension technique for making superabsorbent polymer beads, the cross-linking agent is added after polymerization has been nearly or totally completed.

As the polymerization reaction continues, and nears completion, very high conversion of acrylic acid or methacrylic acid, or admixtures thereof, either as the free acid or partially neutralized water soluble salts, to the hydrogel is achieved. The characterization of the hydrogel is carefully controlled by monomer concentration, type and ratio of monomers, type and amount of cross-linking agents, type and amount of initiators used, polymerization times and temperatures, the nature of the reaction medium, and procedures used for polymer recovery and/or drying. The hydrogel polymer, depending on these many variables can have any particular combination of gel volume, gel strength, and extractable polymer content. These characteristics are spelled out in US-A-4,654,039, and the superabsorbents of our invention have these desired parameters.

Although US-A-4,654,039 teaches the use of polymerization of free acid monomers, other patents such as US-A-4,286,082, and 4,340,706 prefer to use mixtures of the free acid monomers and their water soluble salts for the synthesis of the hydrogel forming polymers.

Also, US-A-4,340,406 and 4,506,052 teach polymerization by inverse suspension to form superabsorbing hydrogel polymers. Polymers made by this inverse emulsion or inverse suspension technique are also included.

Irrespective of any of the techniques above, which are used to manufacture the hydrogel polymers having superabsorbing characteristics, these polymers heretofore have contained residual monomers, i.e. residual acrylic acid or (meth)acrylic acid monomers, or water soluble salts thereof. The concentrations of these residual (meth)acrylic acid monomers could provide for skin irritation to sensitive persons in contact with the products containing the same. Other attempts have been made to remove these monomers to low concentration values, thereby decreasing any potential health or safety hazard due to the content of residual monomer. For example, US-A-4,766,173, Bailey, et. al., covers a method of reducing residual acrylic acid present in water-insoluble polyacrylic acid, water absorbent, gel polymers by treating the polyners with amino acids chosen from the group consisting of cysteine or lysine. The cysteine and lysine used was ratioed to the acrylic acid present in the superabsorbent materials.

In like fashion Chmelir, US-A-4,929,717, teaches a method of preparing homopolymers or copolymers that are water soluble or that swell up in water and have low residual monomer content. The polymers are treated with a compound that can react and add across the monomer double bond. These compounds are taught to include ammonia, ammonia salts, alkyl amines or their salts, hydroxylamines or their salts, hydrogen halides, acetyl acetonates, malonates that contain active hydrogen atoms, bromosuccinimide, pyridinium bromide, dioxane perbromide, or any compound which contains bromine or releases bromine which bromine then adds across the double bond.

Other vinyl addition compounds, or vinyl reactive compounds include permanganate, bichromate, chromate, selenium dioxide, ozone, or other compounds which may oxidize the vinylic double bond, or with compounds such as alkali sulfites, ammonium sulfites, alkali or ammonium hydrogen sulfites or disulfites, and thio compounds containing sulphur. Again, these compounds can add across or react with the double bond. These reactions are allowed to occur VAZO® within the polymer gel and permit the polymer gel to be dried at elevated temperatures, thereby releasing a polymer gel which has lower content of these monomers. Monomer residual content is lowered from 500-1000 ppm to 100-200 ppm, based on polymer.

Finally, the following patents are cited in US-A-4,929,717, which patents teach various techniques for treating polymers or polymer gels so as to remove unreacted monomer or convert unreacted monomer to other components and compounds, thereby lowering the residual content of monomer contained in the polymer materials.
US-A-2,960,486
4,132,844
3,755,280
3,780,006
4,529,753
4,414,063
4,585,808 and
4,375,529.

In addition, other patents or patent applications are also cited in US-A-4,929,717, which patent applications and patents were filed in other countries and include the following:
DE-A-1,070,377;
JP-B-53/51289,
50/136382,
56/103207 and
55/151015;
EP-A-0175554,
DE-B-2919096,
E P-A-002860,
CS-A-210100, and
GB-A-2113694.

A careful review of each of these references shows numerous ways that the artisan has attempted to solve the problem of removing residual monomer from high molecular weight polymers and superabsorbents. These techniques include reaction with sodium sulfite followed by drying, extraction with methanol or mixtures of methanol and water followed by drying, treating polymer gels with aqueous solutions of sodium bisulfite and with solid alkali sulfite, even sulphur dioxide gas: the addition of tertiary butyl hydroperoxide and sodium metabisulfite, the addition of ethanol amines, the use of steam distillation, isotropic distillation, high energy radiation, and catalytic hydration.

EP-A-441975, in an Article 54(3) relationship to the present application, suggests treatment of dry polymer powder for the removal of residual monomers.

In spite of the many attempts to remove residual monomers, particularly acrylic acid, methacrylic acid, or salts thereof, from these polymers and lightly cross-linked superabsorbent polymer gels, the art has not regularly or successfully taught a consistent and reliable removal of these monomers to levels below 50 parts per million, based on dry polymer weight. There is no art which teaches a removal below 10 parts per million (based on dry polymer) of acrylic acid, acrylic salts, methacrylic acid, methacrylic salts, or mixtures thereof.

We have invented a process which can decrease the residual (meth)acrylic acid monomer content of water soluble and water insoluble polymers to levels below 10 parts per million, based on dry polymer. The process to reduce residual (meth)acrylic acid present in water insoluble polyacrylic acid water absorbent gel polymers comprises treating these polymers, after polymerization, either as a water gel or as a water gel dispersed in oil, with at least 0.05 weight percent, based on wet gel polymer, of a combination of a) a surfactant and b) a chemical compound capable of adding across or reacting with the vinylic carbon carbon double bond (hereinafter sometimes referred to as a "vinylic addition compound"). The components a) and b) are preferably in aqueous solution together.

Our combination treatment agent normally contains from 50 to 0.1 weight percent of a surfactant or mixture of surfactants and from 50 to 99.9 weight percent of a vinylic addition compound, which is any chemical compound capable of adding across or otherwise reacting with the vinylic carbon carbon double bond to form another chemical component which is not capable of being polymerized by free radical initiation.

Our combination of ingredients is normally added to the polymerized mixture, either when the mixture is in a water solution, a water gel, a water-in-oil inverse suspension, or any other form of water containing the polymer formed by the reaction of acrylic acid, methacrylic acid, neutralized or partially, but are not limited to, neutralized (meth)acrylic acid, or water solutions containing these vinylic carboxylic monomers in conjunction with other water soluble monomers. The other water soluble monomers can include at least one of some other unsaturated carboxylic acids and/or carboxylic acid and anhydride monomers, such as ethacrylic acid, alpha-cyano acrylic acid, beta-methyl- acrylic acid, alpha phenyl acrylic acid, beta-acryloxy propionic acid, sorbic acid, itaconic acid, glutaconic acid, maleic acid, fumaric acid, maleic anhydride, and fumaric anhydride. These vinylic monomers can also include monomers which contain sulfonic acid functionality and can include the aliphatic or aromatic vinyl sulfonic acids, such as vinyl sulfonic acids, allyl sulfonic acids, vinyltoluenesulfonic acid, styrene sulfonic acid, acrylic and methacrylic sulfonic acid, sulfoethyl acrylate, sulfoethyl methacrylate, and 2-acrylamido-2-methyl propane sulfonic acid.

Additionally, neutral vinylic monomers can include acrylamide, methacrylamide, N-methyl acrylamide, ethylacrylate, methylacrylate, and other carboxylic acid or sulfonic acid ester containing monomers, hydroxyl group containing monomers, amide group containing monomers, amino group containing monomers, nitryl group containing monomers, and quaternary ammonium salt group containing monomers. Various monomers are spelled out in greater detail in Masuda, et. al., US-A-4,076,663, and Westerman, US-A-4,062,817.

Primarily, however, our invention is aimed at solving a problem of removing residual acrylic acid, methacrylic acid, or salts thereof contained in high molecular weight polymer gels, particularly the lightly cross-linked water insoluble high molecular weight hydrogel-forming superabsorbent polymer compositions useful to absorb large quantities of water or body fluids containing water.

Our process can decrease the residual (meth)acrylic acid monomer content of these superabsorbent polymers to levels below 50 parts per million, and preferably below 10 parts per million (on the basis of dry polymer), and comprises the addition, preferably by spraying (but also by immersion), of an aqueous solution containing our combination products of surfactant and vinylic addition compounds onto a chopped up polymer gel or preformed polymer beads, which chopped gel or beads can contain anywhere from 5 to 95 weight percent polymer. The combination product contains the surfactant and the chemical vinylic addition compounds described above. This combination product, which as earlier stated contains from 50 to 0.1 weight percent surfactant and from 50 to 99.9 weight percent of a chemical vinylic addition compound is itself contained in an aqueous solution or suspension at concentrations ranging from 0.01 weight percent to 25 weight percent, preferably from 0.05 weight percent to 10 weight percent, and most preferably from 0.25 weight percent to 5 weight percent of the total of the combination products. The combination product can contain both surfactant and vinyl addition compound in weight ratios of from 50:50 to 0.1 to 99.9.

The aqueous superabsorbent polymer gel is then dried.

The combination product is a combination of a surfactant or a mixture of surfactants and a chemical vinylic addition compound, or mixtures of these types of compounds, in the above listed weight ratios. The surfactant may be any surfactant which has a Hydrophilic-Lipophilic Balance (HLB) ranging from 3 to 40, preferably a surfactant ranging in H LB from 8 to 40, and most preferably a surfactant which has an HLB ranging from 12 to 40. The surfactant also should be capable, when added to pure distilled water at a concentration of at least 1000 parts per million, of lowering the surface tension of this water, in contact with air, from 7.23 x 10⁻²N/M (72.3 dynes/cm) to a surface tension ranging from 1.5 to 5 x 10⁻²N/M (15 to 50 dynes/cm), preferably from 2 to 4 x 10⁻²N/M (20 to 40 dynes/cm), and most preferably from 2 to 3.5 x 10⁻²N/M (20 to 35 dynes/cm), (all surface tension values at standard temperatures and pressures).

The most preferred surfactants are the methoxy terminated ethylene oxide adducts of siloxanes, 4-24 mole ethylene oxide adducts of C₁₂-C₁₄ fatty alcohols, or fatty acid sulfonates and their alkali metal salts, which fatty acid sulfonates contain from 10-30 carbon atoms, and preferably from 10-24 carbon atoms or the ethylene oxide/propylene oxide adducts of glycol, or glycerine, or mixtures thereof. The surfactants may also be ethylene oxide adducts of phenols or substituted phenols or oligomers of ethylene oxides and/or propylene oxides.

Our surfactants may be fatty acid materials, or their alkali metal salts of fatty acids, which fatty acids contain from 10 to 30 carbon atoms, preferably from 12 to 24 carbon atoms, they are preferably alkali metal salts of fatty acids containing from 10 to 30 carbon atoms, most preferably between 12-24 carbon atoms. The alkali metal salts preferred are sodium or potassium salts of stearic acid and/or lauric acid.

The surfactants in our combination product may be single surfactant materials or they may be mixtures of surfactants, such as any mixture of those specific surfactants listed above.

The chemical vinyl addition compound materials are materials capable of adding across or reacting with a vinylic double bond so as to form reaction product(s) which is incapable of vinylic polymerization by free radical initiation. Such chemical vinylic addition compounds include sulfites or bisulfites or their alkali metal salts, especially the sodium and potassium salts, or mixtures thereof. They may also include alkyl or aryl, or substituted alkyl or aryl sulfinic acids, or water soluble salts thereof, or mixtures thereof, and also include phosphites or hypophosphites and their alkali metal salts, sulfur containing amino acids such as cysteine, lysine or water soluble salts thereof, biphosphites or their alkali metal salts, various thio sulfate derivatives such as alkali metal salts or their combinations, bichromates, chromates, selenium dioxides or ozone. In addition, bromosuccinimide, pyridinium bromides, dioxane perbromides, hydroxylamine or hydroxylamine salts, also are within this class of compounds. These compounds may be used singly, in admixture with one another, or in addition to the combination product in admixture with salts of oxidizing anions, such as persulfates, and peroxide, i.e. one or more alkali metal or ammonium salts of persulfate anions.

The vinylic addition compounds are preferably chosen from the group consisting of alkali metal bisulfite salts. such as potassium bisulfite, and sodium bisulfite, potassium or sodium sulfite, alkyl or aryl, or substituted alkyl or aryl sulfinic acids, especially aminoiminomethane sulfinic acid, or water soluble salts thereof, sodium or potassium salts of hypophosphites, sodium or potassium salts of cysteine and/or lysine or the free amino acids, cysteine and lysine, or any admixture of the above.

When practising our process for obtaining a superabsorbent polymer containing residual (meth)acrylic acid monomer at levels below 50 and preferably below 10 parts per million (based on dry polymer), we initiate polymerization of the (meth)acrylic acid, or partially or completely neutralized solutions thereof, with any of the number of free radical initiators, listed above. The polymerizing solutions contain any of a number of different cross-linking agents, but preferable cross-linking agents are chosen from the group consisting of N,N'-methylenebisacrylamide, trimethylol propane triacrylate, triallylamine, diallylamine, and the triacrylic acid esters of ethylene glycol, trimethylol propane, glycerine or other polyoxy ethlene glycols, or any mixtures thereof. The polymerization is continued in solution or in a water-in-oil dispersion or emulsion.

These various end/product gels normally contained anywhere from 200 to 1,500 parts per million unreacted acrylic acid, methacrylic acid, or salts thereof. These gels are then chopped into small particles in preparation for a drying step. The chopped gel particles range in size (average diameter) from 50 microns to 50,000 microns, or higher. If the inverse suspension process gel is used, the particle size ranges from 10 microns to 5,000 microns. These bead materials are then separated by settling and filtering from the oil continous phase. There is no need to chop these beads before drying.

Immediately before a drying step, we spray or otherwise contact the chopped gel or beads with an aqueous solution of my combination product while mixing to ensure best coverage of the combination product solution sprayed onto the particle with the chopped gel particles. Our aqueous sprays can contain the surfactants and vinyl addition compounds described above in the ratios described above. The spray solutions contain both the surfactant and the vinyl addition compounds at those concentrations described above. Primarily, the vinyl addition compounds are added in such a manner in the spray solution so as to be present on at least a mole per mole basis or above. Preferably, this treatment level is at least 2 moles vinyl addition per mole residual monomer and is preferably at least 5 moles vinyl addition compound per mole of residual monomer, especially when treating the chopped gels.

The spray solutions containing our combination products are normally made up in distilled or deionised water, but may also be made up in softened water. Hardness ions, such as calcium and magnesium, should be avoided. The aqueous solutions normally contain from 0.05 to 25 weight percent of vinyl addition compound, preferably from 0.25 to 10 weight percent of this vinyl addition compound and from 0.01 to 5 weight percent of surfactant, preferably from 0.05 to 1.5 weight percent surfactant. Most preferably, the spray solutions contain from 0.05 to 0.5 weight percent surfactant. Although my combination product is preferably a material which forms aqueous solutions, these products nay also form dispersions having cloudy appearance, particularly when the surfactant is a material having a lower HLB, for example an HLB below 8. The aqueous spray containing the combination product is added to the gel particle so as to provide from 0.05 to 10 weight percent of the conbination product solution to the gel (as calculated on the basis of wet gel polymer). The treated gel is then mixed and dried. Drying is normally from 82° to 204°C (180°F to 400°F), preferably from 99° to 191°C (210° F to 375°F), and most preferably from 99° to 177°C (210°F to 350°F).

Although it is convenient in the process to spray an aqueous solution preferably formed by the use of deionised or distilled water, which aqueous solution contains most preferably from 0.10 to 10 weight percent of sodium bisulfite, sodium hypophosphinic acid, alkyl or aryl, or substituted alkyl or aryl sulfinic acids or its sodium or potassium salts, or mixtures thereof, in the presence of surfactants chosen from the group consisting of sodium or potassium lauryl sulfates. ethoxylated polydimethyl siloxane/methoxy capped, ethoxylated (6-12 mole) C₁₂-C₁₄ fatty alcohols, glycerine initiated ethylene oxide-propylene oxide adducts, sodium or potassium stearates, or surfactant mixtures thereof, where the surfactant is present in the spray solution anywhere from 0.05 to 1.5 weight percent.

After the chopped gel or polymer beads has been sprayed with an aqueous solution (or dispersion) of the combination product containing the surfactant and the vinyl addition compound, the spray treated and particulated polymer gel is then mixed for from 10 seconds to 2 hours at from 21° to 93°C (70°F to 200°F) and is then dried at temperatures ranging from 82° to 204°C (180° F to 400°F) preferably from 99° to 191°C (210° F to 375° F), and most preferably from 99° to 177°C (210° F to 350°F), for a period ranging from 2 minutes to 2 hours, preferably the drying step takes from 5 minutes to 30 minutes.

The dried materials consistently analyze as containing considerably reduced concentrations of residual acrylic acid, methacrylic acid, or salts thereof, such residual (meth)acrylic acid concentrations often being below 50 parts per million, based on dry polymer weight, most preferably and most frequently below 10 parts per million acrylic acid monomer based on dry polymer weight. Such materials are claimed per se in present claim 17.

Although the above descriptions are primarily based on polymer gels containing from 5 to 60 weight percent polymer, and preferably from 30 - 50% polymer, similar good results are obtained when our combination product is added to inverse suspension produced superabsorbents, either dried or as the final emulsion before drying.

To further exemplify our invention, the following examples are given:

### EXAMPLES

Treatment of laboratory synthesized cross-linked polyacrylic acid superabsorbent wet gel with a solution containing 2 weight percent sodium bisulfite and 0.1 weight percent of a surfactant, using different treatment techniques outlined below, reduce the residual acrylic acid significantly lower than the levels of acrylic acid obtainable when sodium bisulfite was used alone and in the absence of the surfactant. Five different surfactants were tested in combination with sodium bisulfite, which surfactants included Silwet (Trade Mark) L-7607, potassium stearate, sodium lauryl sulfate, 6-8 mole ethoxylated C₁₂ - C₁₄ alcohols, glycerine initiated EO/PO adducts, and mixtures thereof.

The experiments were performed on several laboratory generated wet gels (40 weight % polymer) containing primarily a partially neutralized sodium acrylate in admixture with acrylic acid, a multi unsaturated cross-linker. and a free radical initiator, and with a wet gel (also 40 weight % polymer) made in an industrial process. Further work was done with a dried powder obtained from the industrial process and with a dry material obtained from a water-in-oil dispersion product.

Experiments are outlined below in the following tables:

**TABLE 1**

| SAMPLE 3222- | * %SBS | %SBS** SOL | %POTASSIUM*** STEARATE | LAB WET GEL (G) | RESIDUAL AA (PPM) |
|---|---|---|---|---|---|
| 192N (control) | -- | -- | -- | 113 | 730 |
| 192A | 1 | 10 | 0.1 | 250 | 110 |
| 192B | 2 | 10 | 0.1 | 250 | 19 |
| 192C | 3 | 10 | 0.1 | 250 | 19 |
| 192D | 4 | 10 | 0.1 | 250 | 11 |
| 192E | 5 | 10 | 0.1 | 250 | 13 |
| 192F | 6 | 10 | 0.1 | 250 | 12 |
| 192G | -- | -- | 0.1 | 250 | 396 |
| 192H | 1 | 10 | -- | 250 | 84 |
| 1921 | 2 | 10 | -- | 250 | 53 |
| 192J | 3 | 10 | -- | 250 | 27 |
| 192K | 4 | 10 | -- | 250 | 11 |
| 192L | 5 | 10 | -- | 250 | 11 |
| 192M | 6 | 10 | -- | 250 | 9 |

| | | | | | |
|---|---|---|---|---|---|
| *weight % sodium bisulfite (based on wet gel polymer) | | | | | |
| ** weight % sodium bisulfite in the spray solution | | | | | |
| *** weight % based on wet gel polymer AA = Acrylic Acid | | | | | |

In Table 1, results are obtained by treating laboratory generated wet gel containing approximately 40 weight percent of a partially neutralized, slightly cross-linked sodium acrylate/acrylic acid superabsorbent polymer, which gel contained less than 3 weight percent (based on polymer) cross-linker, and which gel had been initiated with free radical initiators. The reaction had been run at elevated temperatures, essentially adiabatically, until completed. The gel formed was chopped into particles and aqueous solutions containing the indicated amounts of sodium bisulfite and potassium stearate were sprayed onto the chopped gels using a laboratory atomizer. Total weight of the sodium bisulfite and potassium stearate are set forth in the Table, as is the amount of wet gel treated and the residual acrylic acid determined.

The residual acrylic acid was determined by a liquid chromatography method which took a 2 gram sample of final treated polymer, added this sample to water solvents to a total of 400 grams dilution, extracted this diluted sample with 0.02 molar sulfuric acid, and added an aliquot of this extraction solution to a dual column liquid chromatograph. Various chromatographic packings can be used. The technique was demonstrated to be capable of determining a lower limit of quantification equal to 1.0 parts per million acrylic acid (based on dry polymer), and had an estimated lower limit of detection of approximately 0.3 parts per million acrylic acid (BODP). The percent relative standard deviation for this analytical technique is approximately 6 percent at 8 degrees of freedom, as determined on samples having 13 parts per million residual acrylic acid based on dry polymer. All residual monomer concentrations reported are calculated based on dry polymer, i.e. BODP.

In Table 1, the 192N control was simply an analysis of the laboratory generated wet gel, which was determined to contain 730 parts per million acrylic acid monomer (BODP). In the presence of sodium bisulfite and potassium stearate, this acrylic acid residual was lowered to approximately 110 parts per million when the treatment solution contained only 1 weight percent sodium bisulfite. However, when the treatment solution contained from 2 to 6 percent sodium bisulfite monomer, residuals ranging from approximately 11 to 19 parts per million (BODP) were detected.

This result can be compared later in the same Table with the addition of the same amount of sodium bisulfite in the absence of this very low amount of surfactant. As can be seen, in the absence of surfactant, these lower monomer levels are not obtained until sodium bisulfite solutions are added at concentrations ranging from 4 to 6 percent. Therefore, the presence of the surfactant at 2 and 3 percent sodium bisulfite was instrumental in decreasing the amount of residual acrylic acid.

**TABLE II**

| SAMPLE 3222- | %SBS | %SBS SOL | SURFACTANT 0.1 % | Dl H₂O(G) | LAB WET GEL (G) | RESIDUAL AA (PPM) |
|---|---|---|---|---|---|---|
| 187G (control) | -- | -- | -- | 45 | 250 | 818 |
| 187A | 2 | 10 | Sodium lauryl sulfate | 45 | 250 | 57 |
| 187B | 2 | 10 | Silwet L-7607 (all EO methoxy terminated siloxane) | 45 | 250 | 28 |
| 187C | 2 | 10 | Surf. EO-ALC (6 - 8 Mole ethoxylated C₁₂-C₁₄ alcohol) | 45 | 250 | 81 |
| 187D | 2 | 10 | Voranol 4701 (glycerin initiated EO/PO) | 45 | 250 | 102 |
| 187E | 2 | 10 | Potassium Stearate | 45 | 250 | 157 |
| 187F | 2 | 10 | -- | 45 | 250 | 264 |
| 187H | -- | -- | Sodium lauryl sulfate | 45 | 250 | 734 |
| 1871 | -- | -- | Silwet L-7607 | 45 | 250 | 958 |
| 187J | -- | -- | Surfactant EO-ALC | 45 | 250 | 1026 |
| 187K | -- | -- | Voranol 4701 | 45 | 250 | 963 |
| 187L | -- | -- | Potassium stearate | 45 | 250 | 903 |
| 187M | 2 | 10 | Surfactant EO-ALC | 45 | 250 | 76 |

In Table II, further results are provided with additionaL experiments. In this case, the 187G control was a material obtained by simply spraying with water alone the laboratory wet gel. As can be seen, this base wet gel contained approximately 818 parts per million acrylic acid. By adding sodium bisulfite and the various listed surfactants at a concentration of 0.1 weight percent surfactant (based on wet gel polymer weight) and 2 weight percent sodium bisulfite (based on wet gel polymer weight) considerably lower residual acrylic acid is obtained than available with just treatment with sodium bisulfite alone, or with any of the surfactants alone. In the presence of the combination of sodium bisulfite and any of five different surfactants, the residual acrylic acid found after treatment is far less than any amount of residual acrylic acid found in the blank, with treatment only with SBS (sodium bisulfite) or with treatment with only the surfactants. The wet gel treated was a day old, Dl (Deionised) water was used to dissolve the sodium bisulfite and the surfactants.

This solution was sprayed with an atomizer onto the wet gel. Attention is also brought to example 3222-187C and 3222-187M, which are duplicates and show very reasonable reproduction of data. Table II data was generated on day old gel at room temperatures (approximately 21°-23°C (70 - 74°F)).

**TABLE III**

| SAMPLE 3324- | %SBS | %SBS SOL | SURFACTANT 0.1 % | Dl H₂O(G) | LAB WET GEL (G) | RESIDUAL AA (PPM) |
|---|---|---|---|---|---|---|
| 1G (control) | -- | -- | -- | 22.5 | 125 | 604 |
| 1A | 2 | 10 | Sodium lauryl sulfate | 45 | 250 | 7.8 |
| 1 B | 2 | 10 | Silwet L-7607 | 45 | 250 | 2.9 |
| 1C | 2 | 10 | Surfactant EO-ALC | 45 | 250 | 6.9 |
| 1D | 2 | 10 | Voranol 4701 | 45 | 250 | 8.1 |
| 1E | 2 | 10 | Potassium stearate | 45 | 250 | 23 |
| 1 F | 2 | 10 | -- | 45 | 250 | 70 |
| 1H | -- | -- | Sodium lauryl sulfate | 45 | 250 | 622 |
| 11 | -- | -- | Silwet L-7607 | 45 | 250 | 712 |
| 1J | -- | -- | Surfactant EO-ALC | 45 | 250 | 950 |
| 1 K | -- | -- | Voranol 4701 (HLB - 3) | 45 | 250 | 882 |
| 1 L | -- | -- | Potassium stearate | 45 | 250 | 978 |
| 1M | 2 | 10 | Surfactant EO-ALC | 45 | 250 | 15 |

In Table III above, sodium bisulfite and various surfactants were again used, this time with a fresh gel obtained by same day polymerization. The results were also obtained from same day analysis. Sodium bisulfite was dissolved initially in the Dl water followed by addition of the indicated surfactant. Although there was no particular benefit to this sequence of making the combination, the solutions obtained by this sequence appeared to provide better clarity, therefore better solutions and are thought to provide preferred results. As can be seen the Table III control, again using sprayed water alone, indicated a residual acrylic acid of approximately 604 parts per million. Treatment at 66°C (150° F) throughout Table III indicated an ability using the combination of sodium bisulfite and the listed surfactants to obtain residual acrylic acid values consistently below 10 parts per million.

Again, as before, merely treating with sodium bisulfite or the surfactants alone (absent the vinyl addition compounds) did not provide nearly the same benefit as observed in the combination treatment.

As earlier taught, there are alternative vinylic addition compounds other than sodium bisulfite. To demonstrate the effectiveness of these compounds by themselves, the results in Table IV were generated.

**TABLE IV**

| SAMPLE 3324 | TREATMENT | %TREATMENT BOPW | %SOL BOT | COMMERCIAL DRY POWDER (G) | RESIDUAL AA (PPM) |
|---|---|---|---|---|---|
| Control | -- | -- | -- | -- | 300 |
| 6A | Aminoiminomethanesulfinic Acid | 3 | 2.5 | 250 | 26 |
| 6B | Sodium hypophosphite | 3 | 2 5 | 250 | 230 |
| 6C | Sodium hypophosphite, | 3 | 2.5 | 250 | 117 |
| | Ammonium persulfate | 0.5 | 2.0 | | |

Table IV shows the ability of certain of these vinylic addition compounds to reduce residual acrylic acid in the absence of surfactant. It is believed and expected that in the presence of the surfactants defined herein and as outlined in prior Tables, additional improvement would be seen in achieving lowered monomer residuals. The results would be expected to be comparable to those shown with the SBS-surfactant combinations.

In summary, we have demonstrated a process for decreasing the residual (meth)acrylic acid monomer content of superabsorbent polymers to levels below approximately 50 and preferably below 10 parts per million, based on dry polymer, which process comprises adding to an aqueous superabsorbent polymer gel, or a dried gel obtained therefrom, a combination of a surfactant and a chemical compound capable of vinylic addition or reaction with across a vinylic double bond, where the surfactant and chemical addition compound are contained in combination at a weight ratio ranging from 50:50 to 0.1:99.9 and the combination is added to the superabsorbent polymer at either the superabsorbent gel stages prior to drying or to the dried superabsorbent polymer gel at concentrations of active total combination product (normally added as a water solution) ranging at least from 0.05 weight percent (based on wet gel polymer) to as much as 10 weight percent, based on wet gel polymer, or above, admixing, reacting, and drying the so treated superabsorbent polymer, either as a gel, a chopped gel, an emulsion polymer bead, or a dry product, to obtain a superabsorbent dry polymer containing less than 50, and preferably less than 10 parts per million residual (meth)acrylic acid or its salts.

The surfactant used in the combination product preferably has an HLB ranging from 3 to 40, preferably from 8 - 40, and most preferably from 12 - 40, and is capable of lowering the surface tension of pure water to between 1.5 to 5x10⁻² N/M (15 to 50 dynes/cm) when added to water at least 1,000 parts per million, or above.

We have also taught a composition of superabsorbent polymer, which polymer is manufactured from (meth)acrylic acid, or alkali metal salts thereof, or mixtures thereof, in the presence of di- or trivinylic/allylic cross-linking agents, and contains residual (meth)acrylic monomers content below 50, and preferably below 10 parts per million, based on dry polymer weight. The low residual monomer superabsorbent polymer is manufactured by any process which obtains a wet superabsorbent polymer gel, either as an aqueous gel or finally divided aqueous gels, or as finely dispersed water gel bead in a continuous oil phase. However obtained, the water gel is then treated with admixtures of our surfactants and vinylic addition compounds, thereby forming a treated gel, which, on reacting and drying, obtains a dry superabsorbent polymer containing less than 50 and preferably less than 10 parts per million residual (meth)acrylic acid monomer.

To the best of our knowledge, this is the first time that anyone has been able to consistently achieve a superabsorbent polymer which contains residual acrylic acid or (meth)acrylic acid monomer below 10 parts per million, based on dry polymer weight. The techniques of combining a surfactant and a vinyl addition compound for this purpose are not taught in the art, and the description of the invention above clearly shows unexpected results in terms of the use of the combination.

## Claims

1. A method for reducing residual (meth)acrylic acid present in water insoluble polyacrylic acid water absorbent gel polymers which comprises treating these polymers, either as a water gel or as a water gel dispersed in oil, with at least 0.05 weight percent, based on wet gel polymer, of a combination of a) a surfactant and b) a compound capable of addition across a vinylic carbon to carbon bond.

2. The method according to claim 1 wherein the surfactant has an HLB ranging from 3 to 40 and is capable, when added to pure water at a concentration of at least 1000 ppm, of lowering the water surface tension to between 1.5 and 5 x 10⁻²N/M (15 to 50 dynes/cm) at standard temperature and pressure.

3. The method of claim 2 wherein the surfactant has an HLB ranging from 8 to 40.

4. The method of claim 3 wherein the surfactant has an HLB ranging from 12 to 40.

5. The method of any preceding claim wherein the compound (b) is one or more of:
a. sulfites, or alkali metal salts thereof,
b. bisulfites, or alkali metal salts thereof,
c. phosphites, or alkali metal salts thereof,
d. hypophosphites, or alkali metal salts thereof,
e. alkyl or aryl, or substituted alkyl or aryl sulfinic acids, or water-soluble salts thereof,
f. cysteine,
g. lysine,
h. biphosphites, or alkali metal salts thereof.

6. The method according to claim 5 wherein the chemical compound capable of adding across a vinylic bond is one or more of:
a. sodium or potassium sulfite;
b. sodium or potassium bisulfites;
c. aminoiminomethanesulfinic acid, or water soluble salts thereof;
d. alkali metal salts of hypophosphites;
e. alkali metal salts of thiosulfates;
f. cysteine;
g. lysine.

7. The method according to claim 5 or claim 6 wherein the compound capable of addition across the vinylic bond is aminoiminomethanesulfinic acid or an alkali metal salt of hypophosphite.

8. The method according to claim 7 wherein the compound is sodium bisulfite.

9. The method according to claim 1 wherein the surfactant is one or more of:
a. methoxy terminated ethylene oxide adducts of siloxane,
b. 4-24 mole ethylene oxide adducts of C₁₂-C₁₄ fatty alcohols,
c. ethylene oxide or propylene oxide adducts of glycerine or glycol,
d. C₁₀ - C₃₀ fatty acid sulfonates, and their alkali metal salts,
e. C₁₀ - C₃₀ fatty acids, and their alkali metal salts,
and the so treated polymer is dried at a temperature of at least 82°C (180°F).

10. The method according to claim 1 or claim 2 wherein the surfactant is one of sodium lauryl sulfate, ethoxylated polydimethyl siloxane - methoxy capped, ethoxylated (6-12 mole) C₁₂ - C₁₄ fatty alcohols, glycerine-initiated ethylene oxide-propylene oxide adducts, or potassium stearate.

11. The method according to any preceding claim wherein, in addition to the combination of surfactant and vinylic addition compound, a salt of an oxidizing anion is also added.

12. The method according to claim 11 wherein the salt of an oxidizing anion is one or more of alkali metal or ammonium salts of persulfate anions.

13. The method according to any one of the preceding claims wherein the residual (meth)acrylic acid monomer content of superabsorbent polymers is decreased to a level below 10 parts per million, on the basis of dry polymer.

14. The method according to any one of the preceding claims wherein the weight ratio of (a): (b) ranges from 50:50 to 0.1 to 99.9.

15. The method according to any one of the preceding claims which comprises then drying the aqueous superabsorbent polymer gel.

16. A superabsorbent polymer containing (meth)acrylic acid, or alkali metal salts thereof, a di- or tri-vinylic/allylic cross-linking agent, and a residual (meth)acrylic acid monomer content below 10 ppm, based on dry polymer weight. which superabsorbent polymer is manufactured by a process which obtains a wet superabsorbent polymer gel. either as an aqueous gel or as a finely dispersed water gel bead in a continuous oil phase, which water gel is then treated with an admixture of:
a. a surfactant, and
b. a compound capable of addition across a vinylic double bond,
thereby forming a treated gel; and then drying said treated gel to obtain a dry superabsorbent polymer containing less than 10 ppm residual (meth)acrylic acid monomer.

17. The superabsorbent polymer of claim 16 wherein the surfactant has an HLB of between 3 and 40 and is capable when added to pure water at a concentration of at least 1000 ppm of lowering the pure water surface tension to from 1.5 to 5 x 10⁻²N/M (15 to 50 dynes/cm) : and the compound capable of promoting addition across a vinylic double bond is one or more of:
a. alkali metal salts of sulfites;
b. alkali metal salts of bisulfites;
c. alkyl or aryl, or substituted alkyl or aryl sulfinic acids, or water soluble salts thereof;
d. hypophosphites, and water soluble salts thereof;
e. sulfur containing amino acids, and salts thereof;
and further wherein the admixture ratio of a:b ranges from 50:50 to 0.1:99.9.

## Patentansprüche

1. Verfahren zum Verringern von Rest-(Meth)acrylsäure, die in wasserunlöslichen, wasserabsorbierenden Polyacrylsäure-Gelpolymeren vorhanden ist, umfassend das Behandeln dieser Polymeren entweder als Wassergel oder als in Öl dispergiertes Wassergel mit zumindest 0,5 Gew.-% (bezogen auf nasses Gelpolymer) einer Kombination aus a) einem Tensid und b) einer Verbindung, die zur Addition an einer C/C-Vinylbindung fähig ist.

2. Verfahren nach Anspruch 1, worin das Tensid einen HLB-Wert von 3 bis 40 aufweist und bei Zugabe zu reinem Wasser in einer Konzentration von zumindest 1000 ppm fähig ist, die Wasseroberflächenspannung auf zwischen 1,5 und 5 x 10⁻² N/M (15 bis 50 Dyn/cm) bei Normaltemperatur und -druck abzusenken.

3. Verfahren nach Anspruch 2, worin das Tensid einen HLB-Wert von 8 bis 40 aufweist.

4. Verfahren nach Anspruch 3, worin das Tensid einen HLB-Wert von 12 bis 40 aufweist.

5. Verfahren nach einem der vorhergehenden Ansprüche, worin die Verbindung (b) eine oder mehrere der folgenden Substanzen ist:
a. Sulfite oder Alkalimetallsalze davon,
b. Bisulfite oder Alkalimetallsalze davon,
c. Phosphite oder Alkalimetallsalze davon,
d. Hypophosphite oder Alkalimetallsalze davon,
e. Alkyl- oder Aryl- oder substituierte Alkyl- oder Arylsulfinsäuren oder wasserlösliche Salze davon,
f. Cystein,
g. Lysin,
h. Biphosphite oder Alkalimetallsalze davon.

6. Verfahren nach Anspruch 5, worin die chemische Verbindung, die zur Addition an einer Vinylbindung fähig ist, eine oder mehrere der folgenden Substanzen ist:
a. Natrium- oder Kaliumsulfit;
b. Natrium- oder Kaliumbisulfite;
c. Aminoiminomethansulfinsäure oder wasserlösliche Salze davon;
d. Alkalimetallsalze von Hypophosphiten;
e. Alkalimetallsalze von Thiosulfaten;
f. Cystein;
g. Lysin.

7. Verfahren nach Ansrpuch 5 oder 5, worin die zur Addition an der Vinylbindung fähige Verbindung Aminoiminomethansulfinsäure oder ein Alkalimetallsalz von Hypophosphit ist.

8. Verfahren nach Anspruch 7, worin die Verbindung Natriumbisulfit ist.

9. Verfahren nach Anspruch 1, worin das Tensid eine oder mehrere der folgenden Substanzen ist:
a. Siloxan-Ethylenoxidaddukte mit Methoxy-Endgruppe,
b. 4-24 Mol Ethylenoxidaddukte von C₁₂-C₁₄-Fettalkoholen,
c. Ethylenoxid- oder Propylenoxidaddukte von Glyzerin oder Glykol,
d. C₁₀-C₃₀-Fettsäuresulfonate und ihre Alkalimetallsalze,
e. C₁₀-C₃₀-Fettsäuren und ihre Alkalimetallsalze,
und worin das so behandelte Polymer bei einer Temperatur von zumindest 82°C (180°F) getrocknet wird.

10. Verfahren nach Anspruch 1 oder 2, worin das Tensid eines von Natriumlaurylsulfat, methoxy-verkapptem ethoxylierten Polydimethylsiloxan, ethoxylierten (6-12 Mol) C₁₂-C₁₄-Fettalkoholen, glyzerin-initiierten Ethylenoxidpropylenoxidaddukten oder Kaliumstearat ist.

11. Verfahren nach einem der vorhergehenden Ansprüche, worin zusätzlich zur Kombination eines Tensids und einer Verbindung zur Addition an Vinyl auch ein Salz eines oxidierenden Anions zugegeben wird.

12. Verfahren nach Anspruch 11, worin das Salz eines oxidierenden Anions eines oder mehrere von Alkalimetall- oder Ammoniumsalzen von Persulfatanionen ist.

13. Verfahren nach einem der vorhergehenden Ansprüche, worin der Rest-(Meth)acrylsäuremonomoner-Gehalt superabsorbierender Polymere auf einen Wert unter 10 ppm, bezogen auf trockenes Polymer, verringert wird.

14. Verfahren nach einem der vorhergehenden Ansprüche, worin das Gewichtsverhältnis von (a):(b) von 50:50 bis 0,1:99:9 reicht.

15. Verfahren nach einem der vorhergehenden Ansprüche, umfassend das anschließende Trocknen des wäßrigen superabsorbierenden Polymergels.

16. Superabsorbierendes Polymer, enthaltend (Meth)acrylsäure oder Alkalimetallsalze davon, ein Di- oder Trivinyl/allyl-Vernetzungsmittel und einen Rest-(Meth)acrylsäuremonomer-Anteil von unter 10 ppm, bezogen auf das Trokkenpolymer-Gewicht, welches superabsorbierende Polymer durch ein Verfahren hergestellt wird, das ein nasses superabsorbierendes Polymergel entweder als wäßriges Gel oder als fein dispergierte Wassergelperle in einer kontinuierlichen Ölphase bildet, welches Wassergel dann mit einem Gemisch aus:
a. einem Tensid und
b. einer Verbindung, die zur Addition an einer Vinyldoppelbindung fähig ist,
behandelt wird, wodurch ein behandeltes Gel entsteht; und das das Trocknen des behandelten Gels vorsieht, um ein trockenes superabsorbierendes Polymer mit weniger als 10 ppm Rest-(Meth)acrylsäuremonomergehalt zu erhalten.

17. Superabsorbierendes Polymer nach Anspruch 16, worin das Tensid einen HLB-Wert von zwischen 3 und 40 aufweist und bei Zugabe zu reinem Wasser in einer Konzentration von zumindest 1000 ppm fähig ist, die Oberflächenspannung von reinem Wasser auf 1,5 bis 5 x 10⁻² N/M (15 bis 50 Dyn/cm) abzusenken; und worin die zur Förderung der Addition an einer Vinyldoppelbindung fähige Verbindung eine oder mehrere der folgenden Substanzen ist:
a. Alkalimetallsalze von Sulfiten;
b. Alkalimetallsalze von Bisulfiten;
c. Alkyl- oder Aryl- oder substituierte Alkyl- oder Arylsulfinsäuren oder wasserlösliche Salze davon;
d. Hypophosphite und wasserlösliche Salze davon;
e. schwefelhältige Aminosäuren und Salze davon;
und worin weiters das Mischverhältnis von a:b von 50:50 bis 0,1:99,9 reicht.

## Revendications

1. Méthode pour réduire l'acide (meth)acrylique résiduel présent dans des polymères en gel absorbant l'eau d'acide polyacrylique insolubles dans l'eau qui comprend le traitement de ces polymères, soit sous la forme d'un gel dans l'eau ou d'un gel dans l'eau dispersé dans l'huile avec au moins 0,15% en poids, en se basant sur le polymère en gel humide, d'une combinaison de a) un agent tensio-actif et b) un composé capable d'addition à travers une liaison vinylique carbone à carbone.

2. Méthode selon la revendication 1 où l'agent tensio-actif a une valeur de HLB comprise entre 3 et 40 et il est capable, lorsqu'il est ajouté à de l'eau pure à une concentration d'au moins 1000 ppm, d'abaisser la tension de surface de l'eau entre 1,5 et 5x10⁻² N/M (15 à 50 dynes/cm) à température et pression standards.

3. Méthode de la revendication 2 où l'agent tensio-actif a une valeur de HLB comprise entre 8 et 40.

4. Méthode de la revendication 3 où l'agent tensio-actif a une valeur de HLB comprise entre 12 et 40.

5. Méthode de toute revendication précédente où le composé b) est un ou plusieurs parmi:
a. sulfites ou leurs sels de métaux alcalins,
b. bisulfites ou leurs sels de métaux alcalins,
c. phosphites ou leurs sels de métaux alcalins,
d. hypophosphites ou leurs sels de métaux alcalins,
e. acides alkyl ou aryl sulfiniques ou alkyl ou aryl sulfiniques substitués ou leurs sels solubles dans l'eau,
f cystéine,
g. lysine,
h. biphosphites ou leurs sels de métaux alcalins.

6. Méthode selon la revendication 5 où le composé chimique capable de s'ajouter à travers une liaison vinylique est un ou plusieurs de :
a. sulfite de sodium ou de potassium,
b. bisulfite de sodium ou de potassium,
c. acide aminoiminométhanesulfinique ou ses sels solubles dans l'eau
d. sels de métaux alcalins des hypophosphites,
e. sels de métaux alcalins des thiosulfates.
f. cystéine,
g. lysine.

7. Méthode selon la revendication 5 ou la revendication 6, où le composé est capable d'addition à travers la liaison vinylique est l'acide aminoiminométhanesulfinique ou un sel d'un métal alcalin de l'hypophosphite.

8. Méthode selon la revendication 7 où le composé est le bisulfite de sodium.

9. Méthode selon la revendication 1 où l'agent tensio-actif est un ou plusieurs de :
a. produits d'addition d'oxyde d'éthylène méthoxy terminé du siloxane,
b. produits d'addition d'oxyde d'éthylène de 4-24 moles d'acides gras C₁₂-C₁₄,
c. produits d'addition d'oxyde d'éthylène ou d'oxyde de propylène de glycérine ou de glycol,
d. sulfonates d'acide gras C₁₀-C₃₀ et leurs sels de métaux alcalins,
e. acides gras C₁₀-C₃₀ et leurs sels de métaux alcalins.
et le polymère ainsi traité est séché à une température d'au moins 82°C (180°F).

10. Méthode selon la revendication 1 ou la revendication 2, où l'agent tensio-actif est un parmi le lauryl sulfate de sodium, des alcools gras C₁₂-C₁₄ éthoxylés, coiffés en méthoxy - polydiméthylsiloxane éthoxylé. des produits d'addition d'oxyde d'éthylène - oxyde de propylène amorcés à la glycérine ou du stéarate de potassium.

11. Méthode selon toute revendication précédente où, en plus de la combinaison de l'agent tensio-actif et du composé d'addition vinylique, on ajoute également un sel d'un anion oxydant.

12. Méthode selon la revendication 11, où le sel d'un anion oxydant est un ou plusieurs de sels des métaux alcalins ou d'ammonium d'anions de persulfate.

13. Méthode selon l'une quelconque des revendications précédentes, où la teneur en monomère d'acide (meth)acrylique résiduel des polymères superabsorbants est diminuée à un niveau en dessous de 10 parties par million sur la base du polymère sec.

14. Méthode selon l'une quelconque des revendications précédentes, où le rapport pondéral de (a):(b) est compris entre 50:50 et 0,1 à 99,9.

15. Méthode selon l'une quelconque des revendications précédentes qui comprend alors le séchage du gel du polymère superabsorbant aqueux.

16. Polymère superabsorbant contenant de l'acide (meth)acrylique ou ses sels de métaux alcalins, un agent réticulant di- ou tri-vinylique/allylique et une teneur en monomère d'acide (meth) acrylique résiduel en dessous de 10 ppm, en se basant sur le poids sec du polymère, lequel polymère superabsorbant est fabriqué par un procédé qui obtient un gel du polymère superabsorbant humide, soit sous la forme d'un gel aqueux ou d'une perle du gel finement dispersée dans l'eau dans une phase continue d'huile, lequel gel dans l'eau est alors traité avec un mélange de:
a. un agent tensio-actif, et
b. un composé capable d'addition à travers une double liaison vinylique,
pour ainsi former un gel traité; puis sécher ledit gel traité pour obtenir un polymère superabsorbant sec contenant moins de 10 ppm du monomère d'acide (meth) acrylique résiduel.

17. Polymère superabsorbant de la revendication 16, où l'agent tensio-actf a une valeur de HLB comprise entre 3 et 40 et il est capable, lorsqu'il est ajouté à de l'eau pure à une concentration d'au moins 1000 ppm, d'abaisser la tension de surface de l'eau pure à une valeur de 1,5 à 5x10⁻² N/M (15 à 50 dynes/cm) : et le composé capable de favoriser l'addition à travers une double liaison vinylique est un ou plusieurs parmi:
a. sels de métaux alcalins de sulfites,
b. sels de métaux alcalins de bisulfites,
c acides alkyl ou aryl sulfinique ou alkyl ou aryl sulfinique substitué ou leurs sels solubles dans l'eau,
d. hypophosphites et leurs sels solubles dans l'eau,
e. acides aminés contenant du soufre et leurs sels,
et de plus où le rapport de mélange de a:b est compris entre 50:50 et 0,1:99,9.
